(19)

Europäisches
Patentamt
European
Patent Office
Office européen
des brevets

(11) **EP 2 980 949 A1**

(12) **EUROPEAN PATENT APPLICATION**

(43) Date of publication:
**03.02.2016 Bulletin 2016/05**

(51) Int Cl.:
*H02J 5/00* (2016.01)        *H01F 41/04* (2006.01)
*H02J 7/02* (2006.01)

(21) Application number: **15150267.1**

(22) Date of filing: **07.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.08.2014   TW 103126378**
**27.10.2014   TW 103136979**

(71) Applicant: **J Touch Corporation**
**Taoyuan Hsien 320 (TW)**

(72) Inventors:
 • **Yeh, Yu-Chou**
  **Taoyuan County 320 (TW)**
 • **Wang, Yu Hsin**
  **Taoyuan County 320 (TW)**
 • **Wu, Chen-Chi**
  **Taoyuan County 320 (TW)**

 • **Yeh, Tsung-Her**
  **New Taipei City 242 (TW)**
 • **Hu, Chih-Ming**
  **Taoyuan County 320 (TW)**
 • **Lin, Ting-Ching**
  **Taoyuan County 320 (TW)**
 • **Tsui, Chiu Cheng**
  **Taoyuan County 320 (TW)**
 • **Cheng, Bo Ruei**
  **Yaoyuan County 320 (TW)**
 • **Yeh, Chun Ting**
  **Taoyuan County 320 (TW)**
 • **Wang, Yu Ju**
  **Taoyuan County 320 (TW)**

(74) Representative: **Viering, Jentschura & Partner mbB**
**Patent- und Rechtsanwälte**
**Kennedydamm 55 / Roßstrasse**
**40476 Düsseldorf (DE)**

(54)    **Thin-film coil component and charging apparatus and method for manufacturing the component**

(57)    Disclosure is to a thin-film coil component (111), and a charging apparatus (11). The thin-film coil (21) is composed of spiral thin-film winding (201). Within the spiral windings (201), a gap exists between adjacent spiral structure, A first thin-film winding (201) forms a first connection port (203) for connecting external circuit at an external end, and has a first winding terminal (207) at an internal end. An induced electric field can be formed by supplying electric current via the connection port. Further, a thin-film coil component (111) is made when two thin-film coils (21, 22) with the same spiral direction are fabricated on two opposite surfaces of a substrate (30). An adhesive layer (303) mixed with Ferromagnetic material is used to combine coils and the substrate (30). An induced electric field is also created when powering this thin-film coil component (111). Assembly of one or more thin-film coil components (111) can make the charging apparatus (11) used to electrically charge an electronic device which includes a device-end thin-film coil component (117).

FIG.3A

**Description**

BACKGROUND

1. Technical Field

The present invention is related to a thin-film coil component, a corresponding charging apparatus, and a method for manufacturing the component; in particular, to the thin-film coil component having thin-film coils and each with a specific line width for inducing an electric field as in a charging process, and charging apparatus composed of multiple thin-film coil components.

2. Description of Related Art

Wireless charging technology is also called induced charging or non-contact induced charging. Wireless charging technology allows a power supply to charge an electronic device by means of near-field induction or the principle of inductive coupling. In general, a charger is disposed with a magnetic core with external copper winding. An electromagnetic field directed to a specific direction is therefore created as power is supplied to the copper winding. An alternate current electromagnetic field can be generated while applying an alternate current. The other winding inside the electronic device receives the AC electromagnetic field, and transforms the electromagnetic field to electric energy. The energy is used to supply power to the electronic device, or to electrically charge a chargeable battery. No wire is necessary since the charger charges the electronic device by means of the principle of inductive coupling.

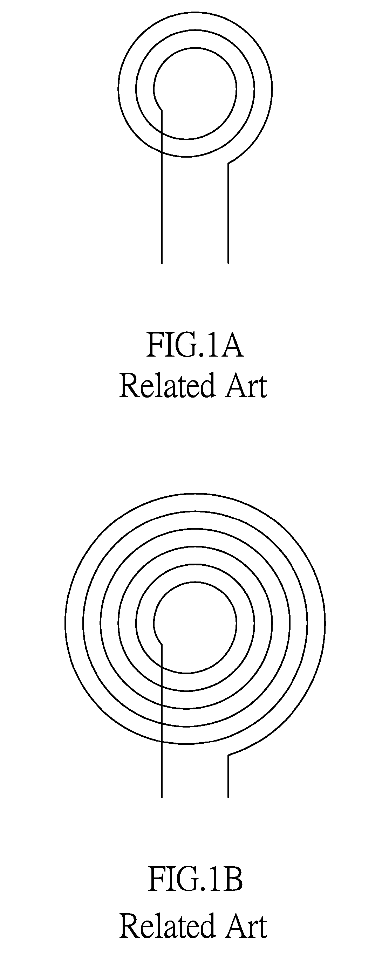

The conventional winding is shown in Fig. 1A and Fig. 1B. Fig. 1A shows a three-turn coil in a wireless charging module. An induced electric field is generated when electrically charging the coil. For increasing the intensity of the induced electric field, reference is made to Fig. 1B, where the number of turns of a plane winding is increased to six. In principle, the intensity of induced electric field can be doubled. However, this scheme may increase more than twice the line length of the winding. The longer winding will also increase its resistance and reduce the charging performance.

Besides requiring a transformer, conventional wireless charging technology has some drawbacks, e.g. low efficiency, that need to be overcame. The wireless charger composed of a first coil and a second coil is restricted by its hardware structure, and has lower efficiency of energy conversion than the regular charger. Further, the external circuitry also limits the energy conversion because the external circuitry has to perform certain processes before the wireless charging module gains the converted power. For example, the external circuitry performs voltage reduction, current rectification, and regulation onto the input power. Similar to the traditional charger, heat will be generated as the device is charged. Thermal dissipation may seriously rise when the line resistance rises up as the number of turns of the wireless coil increases.

SUMMARY

To effectively enhance charging efficiency and reduce heat generation, disclosure in accordance with the present invention is related to a thin-film coil component, a charging apparatus assembling the thin-film coils, and a manufacturing method thereof. The charging apparatus uses high-efficiency thin-film coil configuration to perform electric charging. It has the feature that the resistance may not obviously rise even if the number of turns of the coil increases. The thin-film coil effectively enhances the charging efficiency without too much heat generation.

According to one of the embodiments, the thin-film coil is composed of a spiral thin-film winding. The thin-film winding is a conductor. Adjacent spiral structures exists a gap there-between. The outer side of the thin-film winding has a connection port for external connection, and an inner side thereof has a winding terminal. An induced electric field is generated when current flows from the connection port to the winding terminal.

In one further embodiment, a thin-film magnetic core is formed at a center region of the spiral thin-film winding.

Combination of two thin-film coils forms a thin-film coil component. According to one embodiment, a substrate is included in the component, and the first thin-film coil and the second thin-film coil are respectively formed on two surfaces of the substrate. The first thin-film coil composed of the spiral first thin-film winding is formed on a first surface of the substrate. The outer portion of the first thin-film winding has a first connection port for external circuits. The inner side of the first thin-film winding has a first winding terminal. The second thin-film coil composed of a second thin-film winding is formed on a second surface of the substrate. The outer portion of the second thin-film winding has a second connection port, and the inner side of the winding has a second winding terminal.

Further, the first thin-film coil is electrically connected with the second thin-film coil. The spiral direction of the first thin-film winding is the same as the spiral direction of the second thin-film winding. Therefore, the current flowing through the first connection port and the second connection port induces an electric field.

In the process of forming the thin-film coil component, an adhesive layer is introduced between the thin-film coil and the substrate. The adhesive layer may be mixed with the substance of magnetic material, e.g. ferromagnetic particles, so as to enhance capability of electromagnetic induction and stability of electromagnetic field.

In the process of forming the adhesive layer in the component, a substrate is firstly prepared. Next, an adhesive layer with property of photo-curing and thermal curing is coated onto the substrate. By this adhesive layer, the thin-film coils can be adhered to the substrate. The adhesive layer may be mixed with magnetic material for enhancing the electromagnetic induction and stability of the field for the component. A conductive material is then formed onto the adhesive layer. After the process of photo curing or thermal curing, an etching process is applied to the thin-film coils on the surfaces of the substrate. The thin-film coil component is produced.

Similarly, the center of each of first thin-film winding and second thin-film winding on the surfaces of the substrate has a thin-film magnetic core. In one embodiment, the first thin-film coil is firstly formed on a magnetic thin film, and the second thin-film coil is also formed on another magnetic thin film. The two magnetic thin films are fabricated over two surfaces of the substrate. The substrate may be a magnetic substrate according to one embodiment.

The assembly of one or more thin-film coil components forms a charging apparatus. The charging apparatus is used to charge the electrical apparatus with a corresponding thin-film coil component at the device end.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

BRIEF DESCRIPTION OF THE DRAWINGS

Fig. 1A and Fig. 1B schematically show a form of conventional copper coil;
Fig. 2A and Fig. 2B show schematic diagrams depicting the thin-film coil according to one embodiment of the present invention;
Fig. 3A, Fig. 3B and Fig. 3C show diagrams depicting the thin-film coil component according to one embodiment of the present invention;
Fig. 4 shows a thin-film coil component according to one further embodiment of the present invention;
Fig. 5 shows a thin-film coil in one further embodiment of the present invention;
Fig. 6A shows a schematic diagram depicting a thin-film coil component in one more embodiment of the present invention;
Fig. 6B shows one further diagram depicting the thin-film coil component in one embodiment of the present invention;
Fig. 7 shows a schematic diagram of the thin-film coil in one embodiment of the present invention;
Fig. 8 shows a schematic diagram of the thin-film coil component in one embodiment of the present invention;
Fig. 9 shows a schematic diagram of the thin-film coil component according to one embodiment of the present invention;
Fig. 10A through Fig. 10E show the steps of the method for manufacturing the thin-film coil component according to one embodiment of the present invention;
Fig. 11 schematically shows a charging apparatus according to one embodiment of the present invention;
Fig. 12 schematically shows a waveform diagram illustrating signals at transmitter;
Fig. 13 schematically shows a waveform diagram illustrating induced signals at a receiver;
Fig. 14 schematically shows a waveform diagram illustrating induced signals at a receiver of a double-sided thin-film coil.

DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

Disclosure in accordance with the present invention is related to a thin-film coil and a thin-film coil component. The coil is a conductive thin-film apparatus which is manufactured by thin film technology. The disclosure also relates to a charging apparatus made of thin-film coils. The thin-film coil is with a specified line width allowing inducing an electric field as current flows. The assembly may form a high gain wireless charger having a plurality of thin-film coils. Furthermore, the disclosure is also related to a method for manufacturing the thin-film coil component.

One of the advantages of the thin-film charger is that the resistance of the whole apparatus will not significantly rise up even if the number of turns increases. Therefore, the charging efficiency may be effectively improved. For example, the charging apparatus may improve the charging efficiency from 70% to 80% or higher without too much heat generation.

Furthermore, the thin-film coil may be miniaturized or be 3D modelled so that it renders the charging apparatus to be with flexibility and miniaturization. For example, the thickness of the thin-film coil may be thinner than 0.5mm.

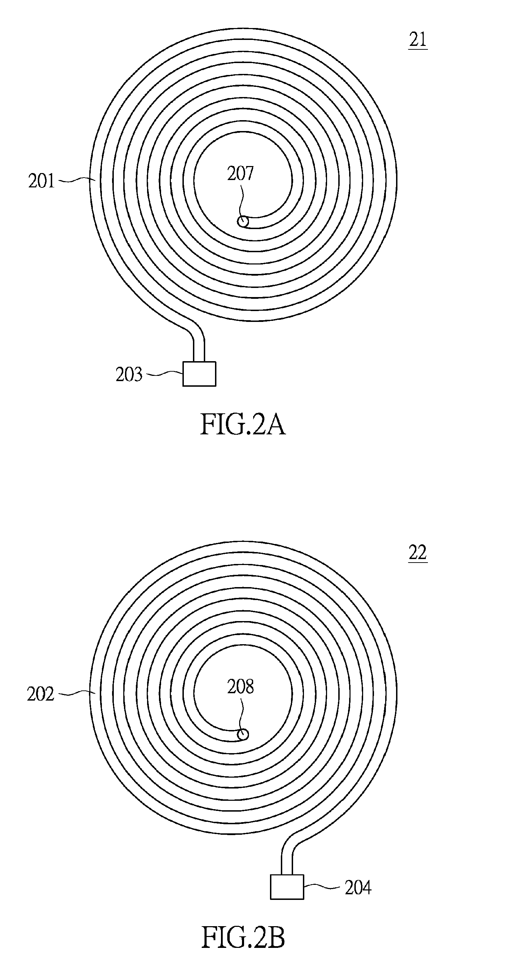

Reference is made to Fig. 2A describing the thin-film coil in one embodiment of the present invention. The thin-film coil is such as a first thin-film coil 21 extending toward a spiral direction. The first thin-film coil 21 is made of spiral first thin-film winding 201. The thin-film coil is with multiple turns.

The thin-film winding is preferably made of conductive materials. Adjacent spiral structures have a gap that prevents the electric signals from mutual coupling. The outer portion of the first thin-film winding 201 has a connection port for connecting with external circuits. The connection port is shown as a first connection port 203. The inner side of the first thin-film winding 201 has a winding terminal, shown as a first winding terminal 207.

Correspondingly, a second thin-film coil 22 shown in Fig. 2B is schematically a reverse-spiral second thin-film coil 22. The second thin-film coil 22 is made of spiral second thin-film winding 202. A gap exists between the adjacent structures. This gap is substantively the same with the gap in the first thin-film coil 21. However, the gap in the first winding (201) may not be the same as the gap in the second winding (202). The outer portion of the second thin-film winding 202 has a second connection port 204, and the inner side of the winding (202) has a second winding terminal 208.

While supplying power through the first thin-film coil 21 and the second thin-film coil 22, the current flows through the first connection port 203, and the second connection port 204 to the first winding terminal 207 and the second winding terminal 208. An induced electric field is generated around the structure.

The gap between the adjacent spiral structures for each coil may be substantially the same or identical. The number of turns for both the first thin-film coil 21 and the second thin-film coil 22 may be the same or different. The area of the windings of the coils 21 and 22 may be the same or different.

As to the material, the windings (201, 202) of first thin-film coil 21 and the second thin-film coil 22 are preferably, but not limited to, flexible copper thin films. Further, the thin-film coil may be a rectangular spiral coil or a circular spiral coil. In practice, the invention is not limited to the above-mentioned shapes of the windings.

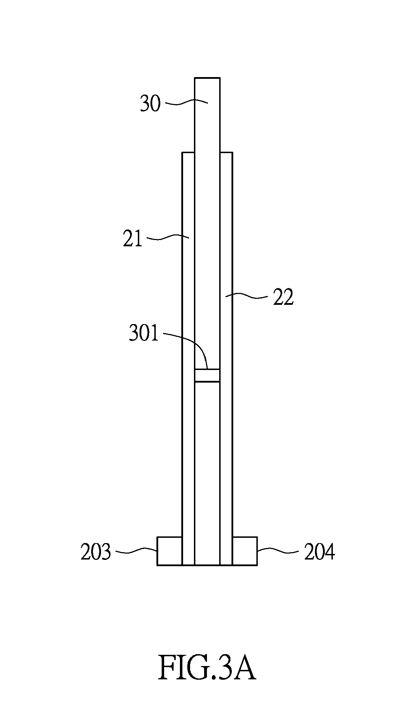

According to one of the embodiments, the fabrication of the thin-film coils is such as the first and second thin-film coils respectively formed on two surfaces of a substrate. The fabrication forms a thin-film coil component, such as the embodiment shown in the diagram of Fig. 3A.

Fig. 3A shows a cross-sectional view of the thin-film coil component according to one embodiment of the present invention. A substrate 30 is shown. Two lateral sides of the substrate 30 are respectively combined with a first thin-film coil 21 and a second thin-film coil 22. The down side of the component includes a first connection port 203 which is the extended wire of the first thin-film coil 21, and a second connection port 204 which is the extended wire of the second thin-film coil 22. A connection scheme is provided to connect the first thin-film coil 21 and the second thin-film coil 22. For example, a via through the substrate 30 is provided to be a coil connection portion 301 used to connect the winding terminals of the two thin-film coils 21 and 22. The winding terminals are such as the first winding terminal 207 and the second winding terminal 208 shown in Fig. 2A and Fig. 2B. Thus, the coil connection portion 301 is provided to serially connect the central terminals of the two coils (21, 22). The fabrication allows enhancing induced electromotive force and induced current that provide about twice the intensity of induced electric field within the area. In other words, merely half the area is required to gain the required induced electric field.

Two sides of the substrate 30 are respectively fabricated with the first thin-film coil 21 and the second thin-film coil 22. A layer of adhesive may be applied to make the fabrication in practice. The spiral structures of the two thin-film windings may be substantively the same. The current flowing from the first connection port 203 to the second connection port 204 may form an induced electric field along a consistent direction. The gap for the two adjacent spiral windings may be substantively the same, but this is not to exclude any design with different gap.

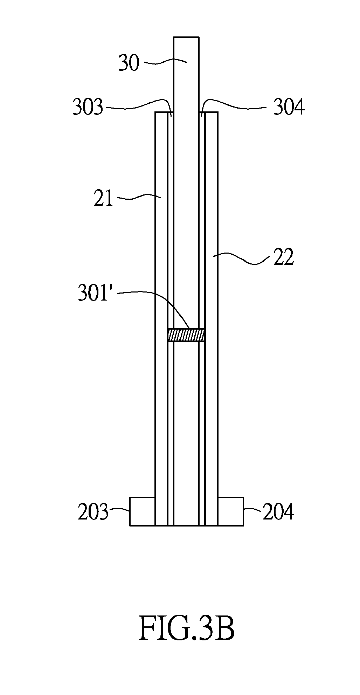

Fig. 3B next shows a schematic diagram of the thin-film coil component in one further embodiment of the present invention.

A cross-sectional view of the thin-film coil component is exemplarily shown. Two adhesive layers 303, 304 are formed onto two surfaces of the substrate 30 respectively. A first thin-film coil 21 and a second thin-film coil 22 are respectively combined with the surfaces of the substrate 30 through the adhesive layers 303 and 304. In particular, the adhesive layers 303, 304 are the materials with property of photo curing or thermal curing, or other curable material. The adhesive layer may be physically mixed with magnetic material, e.g. the ferromagnetic particles.

Below the component, a pair of first and second connection ports 203, 204 extended from the windings of the first thin-film coil 21 and the second thin-film coil 22 is formed. A connection means is incorporated to electrically connecting the first thin-film coil 21 and the second thin-film coil 22. In the present example, a coil connection portion 301' acts as a via electrically connected with terminals of the thin-film coils 21, 22 while breaking through the substrate 30 and the adhesive layers 303, 304. The adhesive layers 303, 304 mixed with the magnetic material are able to enhance the capability of electromagnetic induction and stability of magnetic field of the thin-film coil component. Therefore, the induced electromotive force and induced current of the whole component can therefore be enhanced.

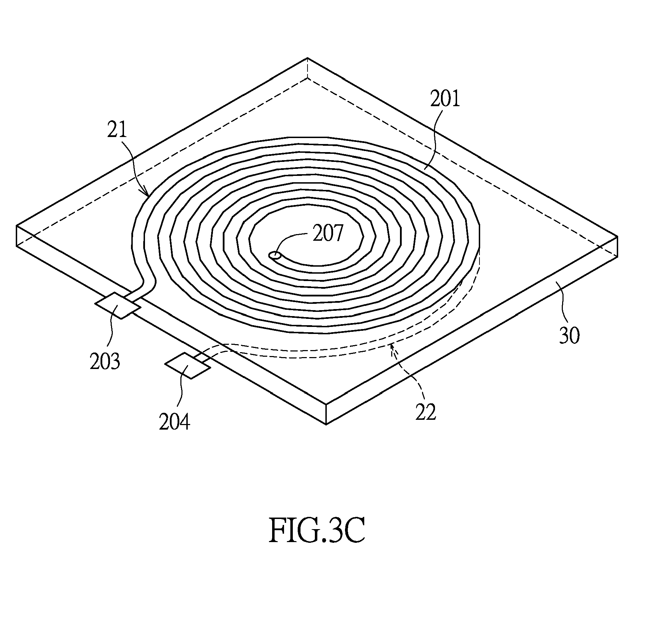

Reference next is made to Fig. 3C depicting a three-dimensional view of the thin-film coil component in one embodiment of the present invention. The two surface of the substrate 30 are respectively fabricated with the first thin-film coil 21 and the second thin-film coil 22. It is noted that the second thin-film coil 22 is shown as dotted line when the coil 22 is at lower side of the substrate 30. The present diagram schematically ignores the thinner adhesive layers (303, 304) within the component.

In an exemplary example, the first thin-film coil 21 has a first connection port 203 connected with external circuits. Similarly, the second thin-film coil 22 has a second connection port 204. In the present embodiment, the two connection ports 203 and 204 are staggered at a distance. The inner sides of the thin-film coils 21 and 22 are respectively a first winding terminal 207 and a second winding terminal 208. As shown in Fig. 3A, the coil connection portion 301 electrically connects the first winding terminal 207 and the second winding terminal 208. The first winding terminal 207 and the second winding terminal 208 are respectively electrically connected to the external circuits.

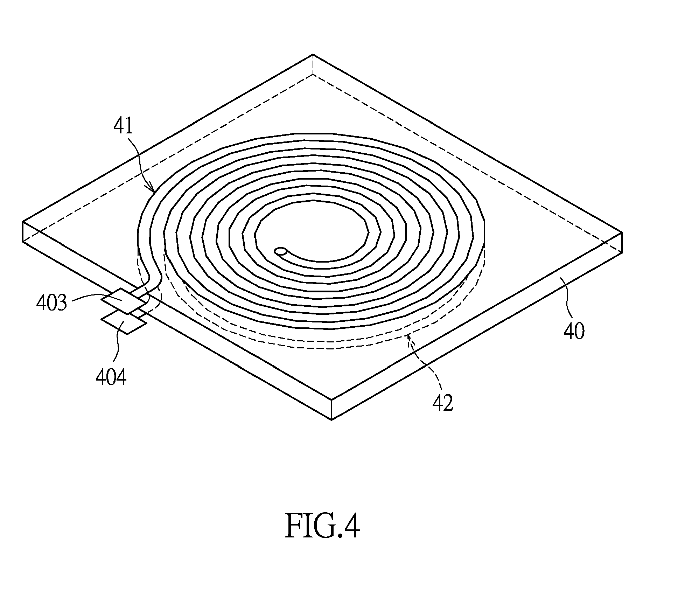

Fig. 4 shows one further diagram depicting a thin-film coil component in one further embodiment of the present invention.

The two sides of the substrate 40 are respectively combined with a first thin-film coil 41 and a second thin-film coil 42. The ends of the two thin-film coils 41 and 42 respectively form a first connection port 403 and a second connection port 404. The first connection port 403 and the second connection port 404 are structurally overlapped across the substrate 40. The example schematically shows the first connection port 403 and the second connection port 404 disposed at the overlapped position across the substrate 40. Since this disposal may reduce the area of the wiring portion, this embodiment facilitates implementing miniaturization of the related device.

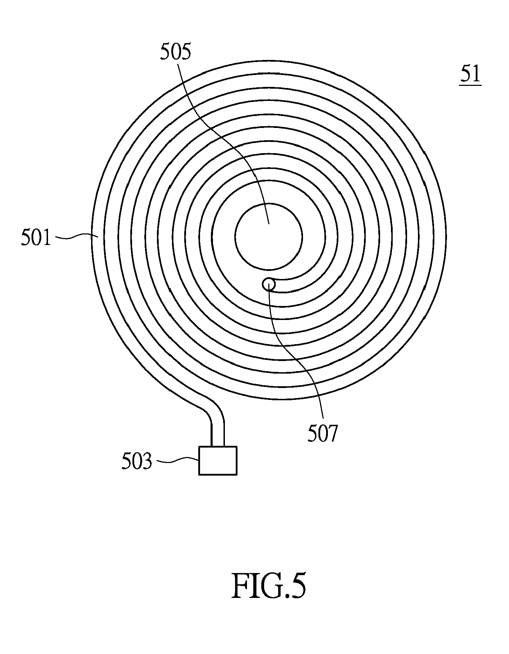

Furthermore, the other embodiment shows a thin-film magnetic core is formed at the center of the spiral thin-film winding of the thin-film coil. The relevant reference is made to Fig. 5.

The thin-film winding 501 along a spiral direction forms the thin-film coil 51. The outside end of the winding has a connection port 503. The inner side of the winding is a winding terminal 507. In particular, the central portion of the winding includes a thin-film magnetic core 505. This magnetic substance is a kind of ferromagnetic material which is used to enhance induced current and induced electromotive force of the thin-film winding 501. More, the thin-film magnetic core 505 may also be a reference to position the coil 51 in the fabrication process. The fabrication of at least two coils 51 forms a thin-film coil component. The induced electric field and electromotive force can be increased when the first thin-film coil and the second thin-film coil are combined. The fabrication reduces eddy current loss.

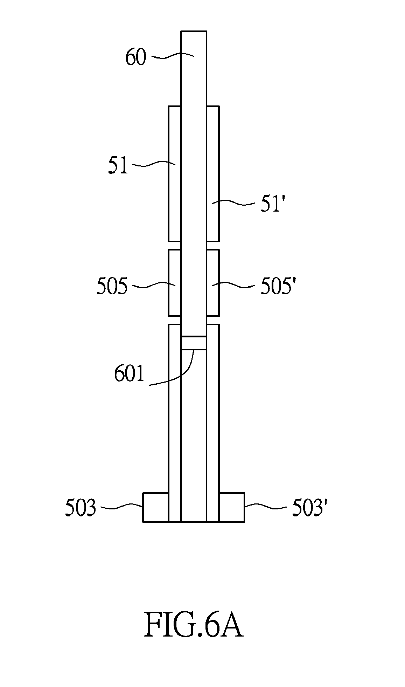

When two thin-film coils (51, Fig. 5) with two individual thin-film magnetic cores (505, Fig. 5) are fabricated, a device shown in Fig. 6A is formed. This cross-sectional diagram depicts a substrate 60 having two lateral surfaces combined with two thin-film coils 51, 51' with the same winding direction. The terminals of the windings of the thin-film coils 51, 51' form the connection ports 503, 503' for wiring the external circuits. The central portions of the two coils 51, 51' are respectively thin-film magnetic cores 505 and 505'. Similarly, a coil connection portion 601 is used to electrically interconnect the winding terminals of the thin-film coils 51,51'.

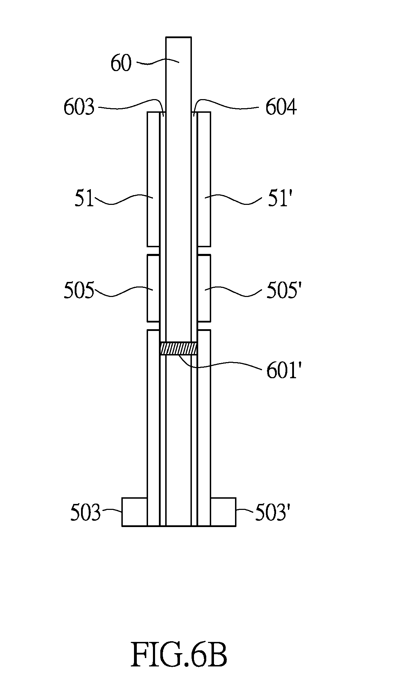

Next, in Fig. 6B, the adhesive layers 603, 604 are formed on the surfaces of substrate 60. The thin-film coils 51, 51' are formed onto the two sides of the substrate 60. A pair of thin-film magnetic cores 505, 505' is then formed at the central regions of the component. A coil connection portion 601' is used to break through the component so as to interconnect the central terminals of thin-film coils 51, 51'. More, the ends of the windings of the thin-film coils 51, 51' are otherwise the connection ports 503, 503' used to connect with external circuit. The adhesive layers 603, 604 are preferably the adhesive material mixed with magnetic materials for the enhancement of electromagnetic induction and stability of the electromagnetic field.

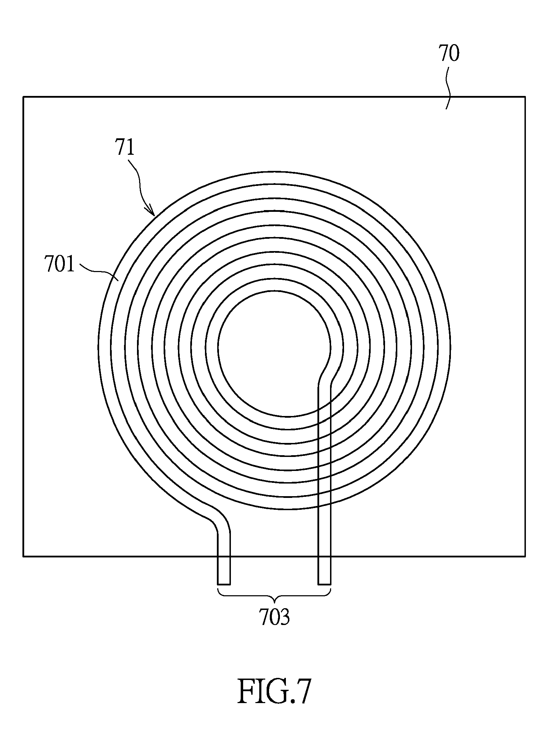

Fig. 7 shows a thin-film coil according to one further embodiment of the present invention.

A thin-film coil 71 is formed on a magnetic thin film 70. The magnetic thin film 70 may be made of Ferrite magnet that allows effectively increasing induced current and induced electromotive force of the thin-film coil 71, and also reducing eddy current loss.

The thin-film coil 71 is composed of spiral thin-film winding 701. The thin-film winding 701 is a conductor. Gap exists between the adjacent spiral structures. In particular, the two ends of the thin-film winding 701 are respectively formed as the connection ports 703. The current flowing through the connection ports 703 forms an induced electric field.

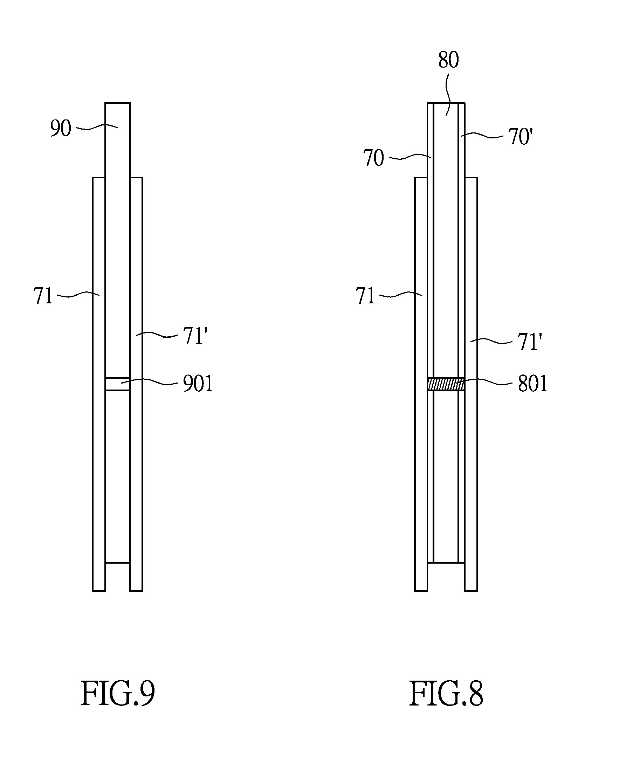

Fig. 8 shows one further thin-film coil component according to one embodiment of the present invention. The thin-film coil component includes a substrate 80. Two surfaces of the substrate 80 are respectively combined with the magnetic thin films 70, 70' as shown in Fig. 7. The two thin-film coils 71, 71' are then formed over the two magnetic thin films 70, 70' respectively, and fabricated to the substrate 80 across the magnetic thin films 70, 70'. The fabrication in accordance the embodiment incorporates a coil connection portion 801 to electrically connecting the winding terminals of the magnetic thin film coils 71, 71' by perforating the substrate 80.

Next, refer to Fig. 9, which shows one further thin-film coil component in one embodiment of the present invention. In particular, the thin-film coils 71, 71' are not formed over the magnetic thin films, but directly onto a magnetic substrate 90. A coil connection portion 901 is incorporated to the component for electrically interconnecting the thin-film coils 71, 71' by perforating the substrate 90. By which the two lateral sides of the magnetic substrate 90 are respectively combined with two coils 71, 71' with multiple turns so as to form the component. The windings are along the same spiral direction. The induced current and induced electromotive force of the thin-film coil component may be increased through this Ferrite magnetic substrate 90 in an exemplary embodiment.

It is noted that the electric fields induced by the magnetic materials in the above-described types of thin-film coils in the components should have the same direction, no matter whether the component has thin-film magnetic cores, or if the coils are formed centering the magnetic thin films, upon the magnetic adhesive layer, or over one single magnetic substrate. The thin and solid thin-film winding may form a high-gain 3D thin-film coil used for wireless charging. The configuration can enhance the induced electromagnetic field and stability of field. The related winding implements a flexible and miniaturized wireless charging module, and substantially reduces the thickness of the whole charging apparatus or module. The mentioned thin-film magnetic core, magnetic thin film or magnetic substrate used in the thin-film coil component may be made by paramagnetic or soft-magnetic material.

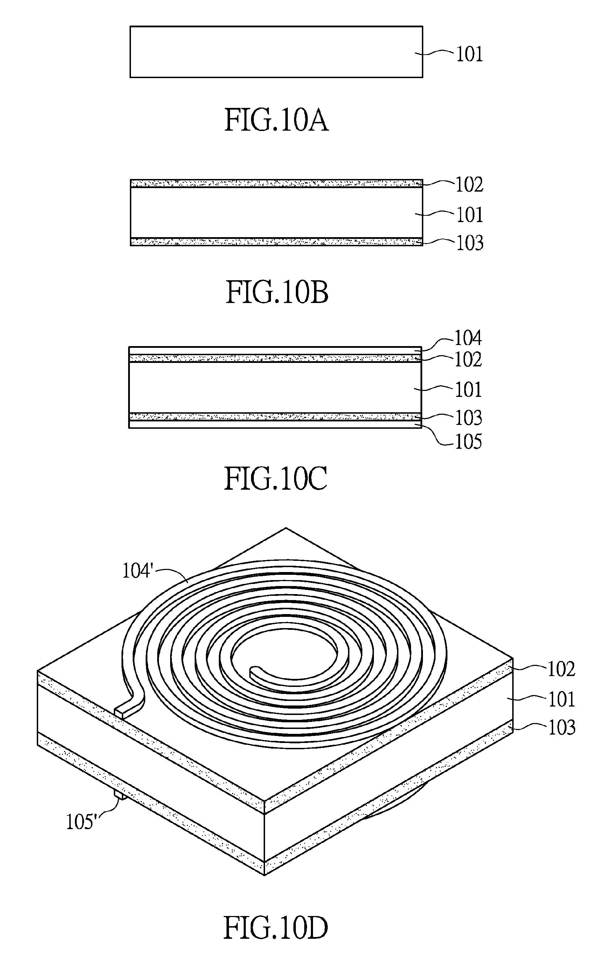

The flow shown in Fig. 10A through Fig. 10E describes the method for manufacturing the thin-film coil component in one embodiment of the present invention, especially forming the component seeking enhancement of electromagnetic induction and stability of the electromagnetic field.

In the beginning, such as in Fig. 10A, a substrate 101 is prepared. Next, in Fig. 10B, the material of adhesive layers (102, 103) is coated onto the substrate 101. It is noted that the material of adhesive layers (102, 103) may be mixed with magnetic material, such as Ferromagnetic particles, which is utilized to enhance the electromagnetic induction and stability of the filed for the whole component. The adhesive layers allow improving electromagnetic conversion efficiency of the thin-film coil component. The adhesive layers produces induced electromotive force or induced current more efficiently. The adhesive material (102, 103) is formed by coating the photo-curing, thermal curing, or other curable material onto the substrate. The adhesive layers (102, 103) are the medium to adhere the consequent conductive material layers 104, 105.

Reference is made to Fig. 10C, the conductive material layers 104, 105 are formed after the adhesive layers (102, 103). The conductive material layers 104, 105 are metal or other kinds of conductive materials formed by one of the methods such as pressing, electroplating, and sputtering. After completing forming the adhesive layers (102, 103) and the conductive material layers (104, 105), a curing process is performed for fabricating the conductive material layers (104, 105) onto the two lateral sides of the substrate 101.

In addition to the fabrication of the substrate 101 and the adhesive layers (102, 103), the conductive material layers (104, 105) can be patterned by an etching process according to the design of the component. The thin-film coils 104' and 105' are therefore formed on the two sides of the substrate 101. The thin-film coils 104', 105' are formed on the adhesive layers 102, 103 which are mixed with magnetic materials. A thin-film coil component is therefore fabricated. In Fig. 10D, the structure on the substrate 101 is such as spiral first thin-film coil 104', and the other side is second thin-film coil 105'. The thin-film coil 104' or 105' is formed at one of the surfaces of the substrate 101 via the adhesive layer 102 or 103. Each thin-film coil is composed of spiral thin-film winding, e.g. the first thin-film winding or second thin-film winding. The adjacent spiral structure exists a gap, and the gap distances among the structure may be the same or different. A pair of connection ports is the extension structure of the thin-film windings. Inside the component, a coil connection portion is formed to interconnect the first thin-film coil 104' and the second thin-film coil 105'.

In further embodiment, during the etching process, both the cured adhesive layers (102, 103) and the conductive material layers (104, 105) can be pattered at the same time. That means the etching process allows the adhesive layers and the thin-film coils have consistent structure.

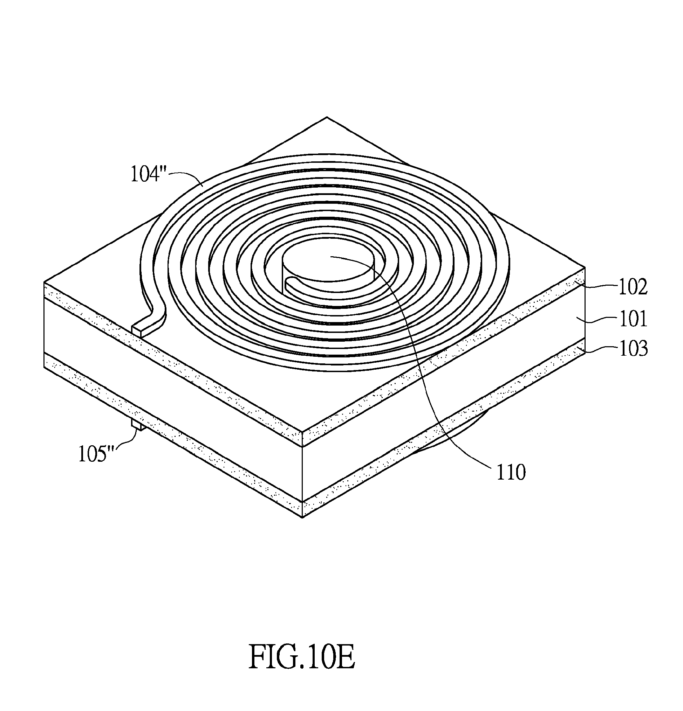

Further, reference is made to Fig. 10E, when forming the first thin-film winding and the second thin-film winding on the substrate 101, the central region of the spiral thin-film winding may be vacated for forming a thin-film magnetic core (110). The thin-film magnetic cores (110) on both sides of component are able to improve the induced current and the induced electromotive force of the thin-film windings. Furthermore, the cores may also be the reference to position the coils.

According to the present embodiment, an etching process is introduced to forming the spiral first thin-film coil 104' and the second thin-film coil 105', and allowing the two coils 104' and 105' to have thin-film magnetic cores (110) respectively.

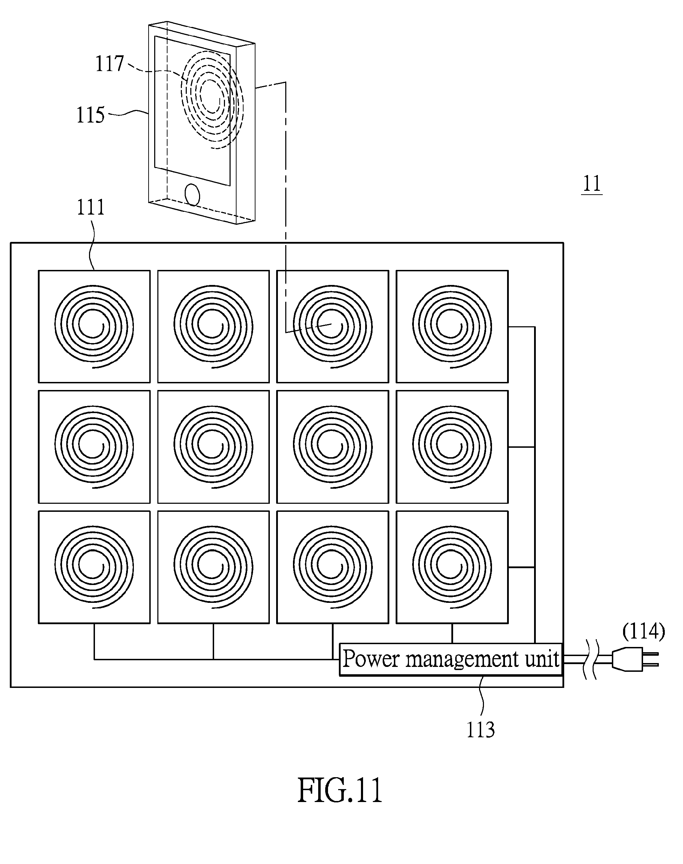

The embodiment of the charging apparatus consisting of the thin-film coil components is referred to in a schematic diagram shown in Fig. 11.

The charging apparatus 11 provides a carrier to fabricate one or more thin-film coil components. This carrier is such as a casing of an electrical apparatus. A thin-film coil component 111 may be disposed within the casing. While the apparatus 11 is powered, the induced electric field is able to charge an electrical apparatus 115 through inside device-end thin-film coil component 117. The thin-film coil component 111 can be referred to in the above embodiments. The thin-film coil component 111 includes a substrate and the first and second thin-coils formed on two surfaces of the substrate. The two thin-film coils are electrically connected by a connection means. For example, a coil connection portion is used to connect the two winding terminals of the thin-film coils. Alternatively, an external circuit may be introduced to connect the winding terminals and connection ports of the thin-film coils.

Furthermore, the carrier of the charging apparatus 11 may be disposed with multiple thin-film coil components 111 arranged in an array. As the diagram shows, the arrayed components 111 generate a uniform induced electric field from a plane of the charging apparatus 11. The induced electric field charges the electrical apparatus 115 when the apparatus 115 is placed over the charging apparatus 11.

The charging apparatus 11 is disposed with a power management unit 113. The power management unit 113 is electrically connected to one or more thin-film coil components 111. The power management unit 113 is bridged with a power supply 114. The power management unit 113 is used to manage the allocation of power within the charging apparatus 11. Through the power management 113, the power-supplied one or more thin-film coil components 111 can charge the electrical apparatus 115 corresponding to the charging apparatus 11. Within the electrical apparatus 115, one or more device-end thin-film coil components 117 are disposed. The device-end thin-film coil may be induced by the components 111 in the charging apparatus 11. The device-end thin-film coil components 117 are induced by the electric field and used to charge the chargeable battery of the electrical apparatus 115, especially by wireless charging.

Some types of the thin-film coils are described as follows.

A thin-film coil component includes at least two planes of thin-film coils, referred as the A plane and the B plane. A substrate separates the two planes. According to experimental data, the intensity of electric field generated by the A plane having an inner diameter of 2 centimeters and with 10 turns of wires may also be generated by a 3D thin-film component composed of the A plane with inner diameter of 2 centimeters and 6 turns of wires and the B plane with inner diameter of 2 centimeters and 2 turns of wires. It is proven that the electric field may be made the same by the thin-film coils having lower turns with lower line resistance in the present invention.

In a configuration of single thin-film coil with the A plane, the induced electromotive force or induced current is inversely proportional to the inner diameter of the coil, and direct proportional to the turn number. For example, a coil having 6 turns of wires, each wire with a width of 1 millimeter, thickness of 0.5 millimeters, and inner diameter of 2 centimeters is provided. With the same size of wires, the electric field induced by the coil is the same as the electric field induced by the thin-film coil with inner diameter of 1.5 centimeters and with 7 turns of wires. The induced electric field is also the same as the electric field induced by the thin-film coil with inner diameter of 1 centimeter and 8 turns of wires.

When the induced electromotive force or induced current is inversely proportional to the inner diameter of the coil, and directly proportional to the turn number, the turn number and line resistance can be effectively reduced when a thin-film coil component composed of the A plane and the B plane is employed. In this case, the windings of the A plane and the B plane have the same direction. The efficiency of wireless charging can be enhanced while the component can obtain substantively the same induced electromotive force and current while the turn number and line resistance of the component is reduced.

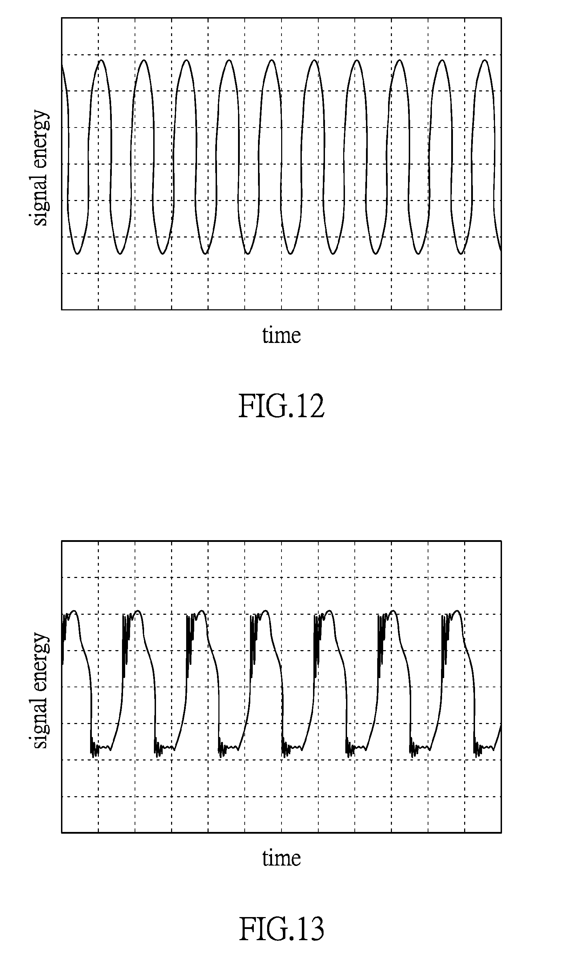

Fig. 12 shows a waveform diagram at a transmitter of the charging apparatus with the thin-film coil component in accordance with the present invention. Fig. 13 shows the waveform diagram of a receiver of the electrical apparatus, for example the apparatus is disposed with a single-sided thin-film coil.

The area in the curve shown in Fig. 12 and Fig. 13 shows a power conversion efficiency of an induced electric field. The equation (1) is used to calculate the power conversion efficiency; in this case the efficiency is around 71.95%. In the equation, an area surrounded by the curve at the transmitter is A1; A2 indicates the area surrounded by the curve at the receiver. The horizontal axis is the time axis, and the vertical axis represents the amplitude of the signal energy.

$$A2 \,/\, A1 = 238 \,/\, 330.75 = 0.7195 = 71.95\% \text{ ------- equation (1)}$$

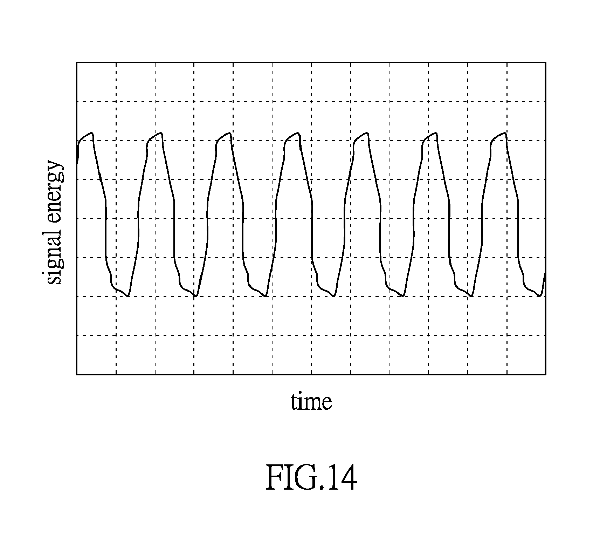

For an example of a thin-film coil component having spiral double-sided thin-film coils, the waveform diagram indicative of the induced signals at the receiver is shown in Fig. 14. Equation (2) is used to calculate the curve area A1 at the transmitter and the curve area A3 at the receiver. The power conversion efficiency is around 79.238%. It appears that the double-sided thin-film coil component has better power conversion efficiency than the single-sided thin-film coil component.

$$A3 \,/\, A1 = 262.08 \,/\, 330.75 = 0.79238 = 79.238\% \text{ ----- equation (2)}$$

According to experimental data, the line resistance of thin-film winding of the thin-film coil is around 0.0001 ohm to 100 ohm, resistivity preferring 0.05-0.1 $ohm/cm^2$; the line width is around 0.5 um to 10 mm, preferring 0.45-2 mm; the gap between the adjacent wires is around 1 um to 10 mm, preferring 5-170 um; the thickness of thin film, e.g. copper thin film is around 0.3 um to 10 mm, preferring 10-140 um; thin-film plane resistivity is around 0.1 to 0.000006 $ohm/cm^2$, preferring 0.00001-0.0003 $ohm/cm^2$.

For the configuration of thin-film coil, lower line resistance is better. The 3D thin-film coil is configured to provide a high-gain 3D thin-film coil with a substrate. The substrate may be made of material with low conductivity and high dielectric coefficient such as flexible glass, alumina plate, PCB soft/hard board, ABS soft/hard board, PET thin film, PI thin film, and magnetic thin film. The substrate with magnetic thin film is such as a PET substrate sputtered with Fe-Co-Ni-O or Fe-Mn-Zn-O or Fe-Ni-Zn-O Ferrite film; or a composite substrate combined with Fe-Co-Ni-O or Fe-Mn-Zn-O or Fe-Ni-Zn-O iron oxide powder and polymer resin. The substrate with superparamagnetic material such as magnetic iron oxide nano particles may enhance the induced electric field.

The thin-film coil and the magnetic thin film may be manufactured by sputtering, evaporation, electroplating, chemical/electroless plating, coating, gravure printing, letterpress printing, screen printing, lithography process (exposure lithography etching), foil, or transfer printing.

Thus, the thin-film coil, the thin-film coil component and the charging apparatus in accordance with the present invention is configured to be a thin, flexible and solid thin film structure, and can implement high-gain 3D thin-film coil for wireless charging. The embodiments show the thin-film coil may be circular spiral type, but this is not excluding other types for practical use, for example a rectangular shape. The spiral thin film coil is configured to have the circular or rectangular structure with a specific width. An electric field is induced as with the traditional copper coil when the current flows through the thin-film coil. However, since the thin-film coil has smaller loss than the copper coil, it effectively enhances the power generation efficiency per unit area, and provides high gain.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

**Claims**

1.  A thin-film coil component (111), comprising:

    a substrate (30);
    a first thin-film coil (21), formed on a first surface of the substrate (30), composed of a spiral first thin-film winding (201), wherein the adjacent spiral structures of the first thin-film winding (201) have a gap; outer portion of the first thin-film winding (201) has a first connection port (203), and the inner side of the winding has a first winding terminal (207);
    a second thin-film coil (22), formed on a second surface of the substrate (30), composed of a spiral second thin-film winding (202), wherein the adjacent spiral structures of the second thin-film winding (202) are at a distance which is the same or different from the gap; outer portion of the second thin-film winding (202) has a second connection port (204), and the inner side of the winding has a second winding terminal (208); and
    electrically-connecting means, electrically connecting the first thin-film coil (21) and the second thin-film coil (22); wherein, the first thin-film coil (21) and the second thin-film coil (22) are respectively disposed on two surfaces of the substrate (30), a spiral direction of the first thin-film winding (201) is the same as the spiral direction of the second thin-film winding (202); and current flowing through the first connection port (203) and the second connection port (204) forms an induced electric field.

2.  The thin-film coil component of claim 1, wherein, a coil connection portion (301) is provided for electrically connecting the first winding terminal (207) and the second winding terminal (208), and allowing the first thin-film coil (21) and the second thin-film coil (22) to be electrically connected.

3.  The thin-film coil component of claim 1, wherein the first thin-film coil (21) and the second thin-film coil (22) are respectively formed on two magnetic thin films, and then disposed over two surfaces of the substrate (30).

4.  The thin-film coil component of claim 1, wherein the substrate (30) is a magnetic substrate.

5.  The thin-film coil component of claim 4, wherein, an adhesive layer (303) is formed between the substrate (30) and the first thin-film coil (21) or the second thin-film coil (22); the adhesive layer (303) is mixed with magnetic material.

6.  The thin-film coil component of claim 5, wherein the magnetic material is Ferromagnetic particles mixed in material of the adhesive layer (303).

7.  The thin-film coil component of claim 6, wherein the adhesive layer (303) is photo-curing or thermal curing material.

8.  The thin-film coil component of claim 5, wherein, a thin-film magnetic core (505) is formed at a central region of the spiral first thin-film winding (201) or the second thin-film winding (202).

9. A method for manufacturing the thin-film coil component (111) according to claim 4, comprising:

preparing a substrate (101);
curable adhesive layers (303, 304) formed on two sides of the substrate (101), wherein the adhesive layers (303, 304) are mixed with magnetic material;
upon two sides of the substrate (101), two conductive material layers respectively formed on the adhesive layers (303. 304);
performing a curing process allowing the conductive material layers combined with the substrate (101);
etching the conductive material layers on two sides of the substrate (101) and respectively forming a first thin-film coil (21) and a second thin-film coil (22);
wherein the first thin-film coil (21) is formed on a first surface of the substrate (101) via the same side adhesive layer (303), the first thin-film coil (21) is composed of a spiral first thin-film winding (201), and a gap exists between adjacent spiral structure; the first thin-film winding (201) forms a first connection port (203) for connecting external circuit at an external end, and has a first winding terminal (207) at an internal end;
wherein the second thin-film coil (22) is formed on a second surface of the substrate (101) via the same side adhesive layer (303), the second thin-film coil (22) is composed of a spiral second thin-film winding (202), and also a gap with the same or different distance exists between adjacent structure; the second thin-film winding (202) forms a second connection port (204) for connecting external circuit at an external end of the second thin-film winding (202), and has a second winding terminal (208) at an internal end; and
forming a coil connection portion (301) electrically connected to the first thin-film coil (21) and the second thin-film coil (22).

10. The method of claim 9, wherein the magnetic material is Ferromagnetic particles mixed in the adhesive layer material.

11. The method of claim 9, wherein, a thin-film magnetic core (505) is formed at a central region of the spiral first thin-film coil (21) or the second thin-film coil (22).

12. A charging apparatus, used to electrically charge an electrical apparatus which is disposed with a device-end thin-film coil component (117), comprising:

one or more thin-film coil components (111), each thin-film coil component (111) comprising:

a substrate (30);
a first thin-film coil (21), formed on a first surface of the substrate (30), composed of a spiral first thin-film winding (201), wherein the adjacent spiral structures of the first thin-film winding (201) have a gap; the outer portion of the first thin-film winding (201) has a first connection port (203), and the inner side of the winding has a first winding terminal (207);
a second thin-film coil (22), formed on a second surface of the substrate (30), composed of a spiral second thin-film winding (202), wherein the adjacent spiral structures of the second thin-film winding (202) are at a distance which is the same or different from the gap; the outer portion of the second thin-film winding (202) has a second connection port (204), and the inner side of the winding has a second winding terminal (208); and
an electrically-connecting means, electrically connecting the first thin-film coil (21) and the second thin-film coil (22);

a power management unit, electrically connecting the one or more thin-film coil components (111);
wherein, in one thin-film coil component (111), the first thin-film coil (21) and the second thin-film coil (22) are respectively disposed on two surfaces of the substrate (30), a spiral direction of the first thin-film winding (201) is the same as the spiral direction of the second thin-film winding (202); and current flowing through the charging apparatus forms an induced electric field in a consistent direction.

13. The charging apparatus of claim 12, wherein, inside the charging apparatus having a plurality of thin-film coil components (111), the thin-film coil components (111) are fabricated in a carrier in an array.

14. The charging apparatus of claim 12, wherein, in every thin-film coil component (111), the first thin-film coil (21) and the second thin-film coil (22) are respectively formed from two magnetic thin films, which are fabricated over two surfaces of the substrate (30).

15. The charging apparatus of claim 12, wherein, in every thin-film coil component (111), the substrate (30) is a magnetic substrate.

16. The charging apparatus of claim 15, wherein, within the thin-film coil component (111), an adhesive layer (303) is formed between the substrate (30) and the first thin-film coil (21) or the second thin-film coil (22); and the adhesive layer (303) is mixed with magnetic material.

17. The charging apparatus of claim 16, wherein, a thin-film magnetic core (505) is formed at a central region of the spiral first thin-film winding (201) or the second thin-film winding (202).

FIG.1A
Related Art

FIG.1B
Related Art

21

201

207

203

FIG.2A

22

202

208

204

FIG.2B

FIG.3A

FIG.3B

FIG.3C

FIG.4

FIG.5

60

51

51'

505

505'

601

503

503'

FIG.6A

FIG.6B

70

71

701

703

FIG.7

FIG.9

FIG.8

FIG.10A

FIG.10B

FIG.10C

FIG.10D

104"

102
101
103

105"

110

FIG.10E

FIG.11

FIG.12

FIG.13

FIG.14

Europäisches
Patentamt

European
Patent Office

Office européen
des brevets

**EUROPEAN SEARCH REPORT**

Application Number

EP 15 15 0267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/184151 A1 (HAN CHANG MOK [KR] ET AL) 3 July 2014 (2014-07-03) | 1,2,5,12 | INV. H02J5/00 H01F41/04 H02J7/02 |
| Y | * paragraph [0006] - paragraph [0016] * <br> * paragraph [0060] - paragraph [0078]; figures 6-8 * <br> ----- | 3-8, 13-17 | |
| Y | WO 2014/054893 A1 (LG INNOTEK CO LTD [KR]) 10 April 2014 (2014-04-10) <br> * paragraphs [0009], [0027] - [0028] * <br> * paragraph [0054] - paragraph [0057] * <br> * paragraph [0063] - paragraph [0065]; figures 1-10 * <br> ----- | 4,7,9, 10,15 | |
| Y | US 2001/052838 A1 (HAMANAKA KENICHI [JP] ET AL) 20 December 2001 (2001-12-20) <br><br> * paragraphs [0045] - [0047]; figure 1 * <br> * paragraph [0035] - paragraph [0041] * <br> ----- | 3,5,6, 9-11,14, 16 | |
| Y | GB 1 416 246 A (DAINIPPON PRINTING CO LTD) 3 December 1975 (1975-12-03) <br> * claim 2; figures 1-3 * <br> ----- | 9 | TECHNICAL FIELDS SEARCHED (IPC) <br> H02J <br> H01F <br> H01L |
| Y | JP H08 203736 A (MURATA MANUFACTURING CO) 9 August 1996 (1996-08-09) <br> * paragraph [0027]; figures 5, 6 * <br> ----- | 8,11,17 | |
| Y | US 2013/099730 A1 (YOON YOUNG SEOK [KR]) 25 April 2013 (2013-04-25) <br> * paragraph [0053] - paragraph [0055]; figures 9, 10 * <br> ----- | 13 | |
| X | WO 2008/016273 A1 (SK CHEMICALS CO LTD [KR]; HAHN SOON-JONG [KR]; KIM WI-JIN [KR]; KIM DO) 7 February 2008 (2008-02-07) <br> * paragraph [0017] - paragraph [0041]; figures 2, 5 * <br> ----- | 1 | |

-/--

The present search report has been drawn up for all claims

| Place of search | Date of completion of the search | Examiner |
|---|---|---|
| Munich | 1 December 2015 | Gatzert, C |

EPO FORM 1503 03.82 (P04C01)

Europäisches
Patentamt

European
Patent Office

Office européen
des brevets

# EUROPEAN SEARCH REPORT

Application Number

EP 15 15 0267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/074321 A1 (YOON YOUNG SEOK [KR] ET AL) 28 March 2013 (2013-03-28)<br>* paragraph [0012] - paragraph [0018] *<br>* paragraph [0029] - paragraph [0062] *<br>----- | 1 | |

TECHNICAL FIELDS
SEARCHED       (IPC)

The present search report has been drawn up for all claims

| Place of search | Date of completion of the search | Examiner |
|---|---|---|
| Munich | 1 December 2015 | Gatzert, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 15 0267

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2015

| Patent document cited in search report | | Publication date | Patent family member(s) | | Publication date |
|---|---|---|---|---|---|
| US 2014184151 | A1 | 03-07-2014 | CN | 103915903 A | 09-07-2014 |
| | | | EP | 2750145 A1 | 02-07-2014 |
| | | | KR | 20140097615 A | 07-08-2014 |
| | | | US | 2014184151 A1 | 03-07-2014 |
| WO 2014054893 | A1 | 10-04-2014 | CN | 104838455 A | 12-08-2015 |
| | | | EP | 2904619 A1 | 12-08-2015 |
| | | | KR | 20140044022 A | 14-04-2014 |
| | | | US | 2015236545 A1 | 20-08-2015 |
| | | | WO | 2014054893 A1 | 10-04-2014 |
| US 2001052838 | A1 | 20-12-2001 | JP | 2001323245 A | 22-11-2001 |
| | | | US | 2001052838 A1 | 20-12-2001 |
| | | | US | 2004127623 A1 | 01-07-2004 |
| GB 1416246 | A | 03-12-1975 | CH | 558129 A | 15-01-1975 |
| | | | DE | 2360259 A1 | 06-06-1974 |
| | | | FR | 2209273 A1 | 28-06-1974 |
| | | | GB | 1416246 A | 03-12-1975 |
| | | | JP | S4978159 A | 27-07-1974 |
| | | | NL | 7316195 A | 07-06-1974 |
| JP H08203736 | A | 09-08-1996 | NONE | | |
| US 2013099730 | A1 | 25-04-2013 | KR | 20130045087 A | 03-05-2013 |
| | | | US | 2013099730 A1 | 25-04-2013 |
| WO 2008016273 | A1 | 07-02-2008 | CN | 101523693 A | 02-09-2009 |
| | | | JP | 2009545876 A | 24-12-2009 |
| | | | KR | 20080012782 A | 12-02-2008 |
| | | | WO | 2008016273 A1 | 07-02-2008 |
| US 2013074321 | A1 | 28-03-2013 | KR | 20130033857 A | 04-04-2013 |
| | | | US | 2013074321 A1 | 28-03-2013 |

EPO FORM P0459

For more details about this annex : see Official Journal of the European Patent Office, No. 12/82